# EUROPEAN PATENT APPLICATION

(11) **EP 4 782 106 A1**
(43) Date of publication of application: **29.07.2026**
(21) Application number: 24868204.9
(22) Date of filing: 12.09.2024
(51) Int. Cl.: B03B 5/62, B03B 9/04, B09B 5/00, C22B 1/00, B09B 101/55

(54) **SPECIFIC GRAVITY SEPARATION DEVICE**

(30) Priority: 21.09.2023 JP 2023155499; 21.09.2023 JP 2023155500; 21.09.2023 JP 2023155501; 21.09.2023 JP 2023155502
(71) Applicant: KUBOTA CORPORATION, Osaka-shi, Osaka 530-0011 (JP)
(72) Inventor: ONUMA Yuto, Amagasaki-shi, Hyogo 661-8567 (JP); INOUE Shigenori, Amagasaki-shi, Hyogo 661-8567 (JP); SAKAMOTO Motohiro, Amagasaki-shi, Hyogo 661-8567 (JP); TANO Takuya, Sakai-shi, Osaka 590-0908 (JP)
(74) Representative: Müller-Boré & Partner Patentanwälte PartG mbB
(86) International application number: PCT/JP2024/032682
(87) International publication number: WO 2025/063127

(57) **Abstract**

Provided is a specific gravity separator capable of efficiently separating and recovering a high-specific-gravity material from a separation target and also reducing the quantity of a low-specific-gravity material mixed in with the recovered high-specific-gravity material to thereby achieve a high recovery rate. The specific gravity separator is configured to: perform specific gravity separation with a conical drum into which the separation target is fed from an upper end side thereof, as well as separation function water supplied from a discharge pipe coupled to a lower end side of the conical drum; discharge the low-specific-gravity material from the upper end of the conical drum; and recover the high-specific-gravity material from the discharge pipe, wherein stirring blades that stir the separation target with rotation of the conical drum are installed on an inner wall of the conical drum.

## Description

### Technical Field

The present invention relates to a specific gravity separator that separates a granular separation target using differences in specific gravity, for example, a technique of separating and recovering valuable metals from waste molten slag, etc.

### Background Art

Waste molten slag is obtained by melt processing in a melting furnace using raw materials such as municipal solid waste incineration ash, shredder dust, and landfilled industrial wastes. The waste molten slag contains valuable metals such as gold, silver, copper, platinum, and palladium, and if the valuable metals can be separated and recovered from the waste molten slag, recycling thereof becomes possible. On the other hand, in a case of recycling crushed slag from molten wastes as aggregates for civil engineering and construction or ceramics raw materials, the waste molten slag can be more effectively recycled if impurities, i.e. metals such as valuable metals, can be separated and recovered at a stage prior thereto.

Patent Literature 1 discloses a specific gravity separator including: a rotary drum that rotates about a rotation axis center inclined at a predetermined angle relative to the horizontal and is formed into a cylinder including a conical portion; a discharge unit coupled to a small-diameter opening formed on a top of the conical portion positioned on a lower end side of the rotary drum; and a separation target feeding unit that is inserted into the rotary drum from a large-diameter opening on an upper end side of the rotary drum and includes an open end opposite to the top of the conical portion, wherein the discharge unit includes a water supply means coupled to an end opposite to the end coupled to the small-diameter opening, the water supply means supplies separation function water, and a separated material discharge means of discharging a separated material is coupled to the middle of the water supply means.

### Citation List

### Patent Literature

Patent Literature 1: Japanese Unexamined Patent Application Publication No. 2003-211019

### Summary of Invention

### Technical Problem

For example, the above-described specific gravity separator can be suitably used for a granular separation target, such as crushed slag from molten wastes, which is a mixture of metals with relatively large specific gravity and slag with relatively small specific gravity.

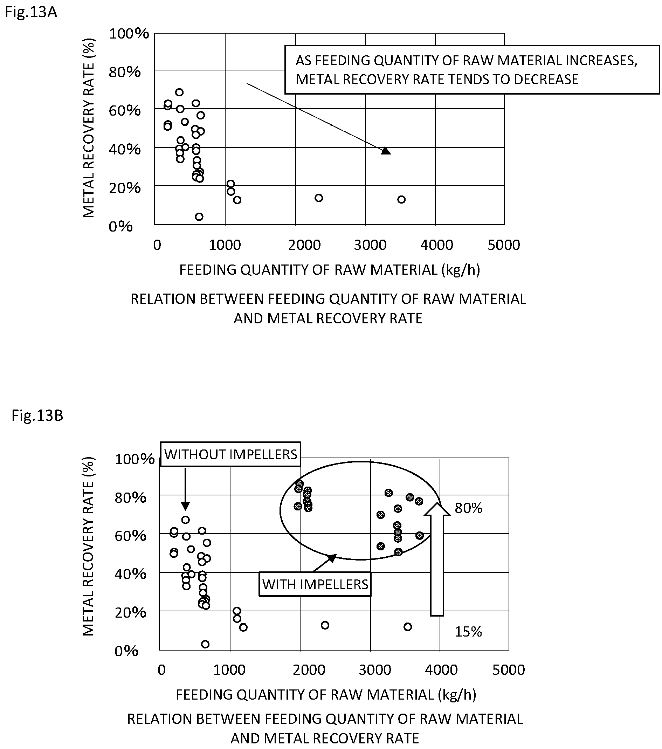

Fig. 13A shows a relation between the quantity of the separation target fed into the specific gravity separator and a recovery rate of metals. As the quantity of the separation target fed into the specific gravity separator increases, separation efficiency decreases and the metals are more likely to be discharged together with the slag from the large-diameter opening by the separation function water, resulting in the reduced recovery rate of metals. On the contrary, as the quantity of the separation target fed into the specific gravity separator decreases, the recovery rate of metals increases but more time is required for the separation.

Moreover, when a flow of the separation function water is restrained, the recovery rate of metals increases, but at the same time, the amount of the slag mixed in with the recovered metals increases, resulting in an increased impurity concentration. As the impurity concentration increases, profit on sale of the recovered valuable metals decreases. As the flow of the separation function water is increased, the impurity concentration decreases but the recovery rate of metals decreases.

Even when the separation target is a granular material other than a mixture of slag and metals, nothing has changed in the above-described tendency. An exemplary case is, separation and recovery of a very small quantity of minerals, where the separation target is a granular material obtained by crushing debris subsequent to mineral processing of the minerals mined from a mine.

The present invention has an object to provide a specific gravity separator capable of efficiently separating and recovering a high-specific-gravity material from a separation target and also reducing the quantity of a low-specific-gravity material mixed in with the recovered high-specific-gravity material to thereby achieve a high recovery rate.

### Solution to Problem

To achieve the above-described object, a specific gravity separator according to a first feature of the present invention includes: a conical drum rotatably supported about an axial center in an inclined posture, the conical drum including a small-diameter opening on a lower end side and a large-diameter opening on an upper end side; a feeding unit that feeds a granular separation target into the conical drum; and a discharge pipe disposed in an inclined posture, the discharge pipe communicating with the small-diameter opening on an upper end side. The specific gravity separator is configured to: supply separation function water from the discharge pipe toward the conical drum while the conical drum is rotating; recover a high-specific-gravity material contained in the separation target flowing down from the small-diameter opening to the discharge pipe against a flow of the separation function water; and discharge a low-specific-gravity material contained in the separation target from the large-diameter opening of the conical drum together with the separation function water, thereby recovering the low-specific-gravity material. At least one stirring blade that stirs the separation target with rotation of the conical drum is installed on an inner wall of the conical drum.

The separation target fed from the feeding unit into the conical drum is immersed in the separation function water supplied from the discharge pipe, and subjected to specific gravity separation by stirring with the rotation of the conical drum, so that the low-specific-gravity material is discharged together with the separation function water from the large-diameter opening. Of the separation target flowing in the discharge pipe, the high-specific-gravity material flows down against the flow of the separation function water and is recovered. Due to the stirring blade installed on the inner wall of the conical drum, the high-specific-gravity material and the low-specific-gravity material are effectively stirred by the stirring blade with the rotation of the conical drum even when the large quantity of separation target is supplied to the conical drum and migrates in a dense state to the small-diameter opening side; and as a result of increased contact with the separation function water and difference between fall velocities of the high-specific-gravity material and the low-specific-gravity material when the treatment target elevated by the stirring blade is falling through the water, the specific gravity separation is effectively carried out and migration of the low-specific-gravity material to the large-diameter opening side is facilitated.

As a second feature in addition to the above-described first feature, the at least one stirring blade includes a plurality of stirring blades installed in a circumferential direction of the conical drum.

With the rotation of the conical drum, the separation target in a dense state is subjected to specific gravity separation while repeatedly drawn up by the stirring blades in the circumferential direction, whereby migration of the low-specific-gravity material to the large-diameter opening side and migration of the high-specific-gravity material to the small-diameter opening side are facilitated.

As a third feature in addition to the above-described first feature, the at least one stirring blade is installed to extend in a direction of the axial center of the conical drum from the small-diameter opening to the large-diameter opening.

With the stirring blades extending in the direction of the axial center of the conical drum from the small-diameter opening to the large-diameter opening, the separation target moving along the axial center of the conical drum is continuously stirred, whereby sufficient opportunity for specific gravity separation can be ensured.

As a fourth feature in addition to the above-described third feature, the at least one stirring blade is intermittently installed in the direction of the axial center.

Due to the stirring blades intermittently installed in the direction of the axial center, the stirring condition changes in the interrupted part, leading to the higher stirring effect.

As a fifth feature in addition to the above-described third feature, the at least one stirring blade is installed in a posture along a radial direction of the conical drum or in an inclined posture at a predetermined angle relative to the radial direction.

Since the stirring blades extending in the direction of the axial center of the conical drum are installed in the posture along the radial direction of the conical drum or in the inclined posture at the predetermined angle relative to the radial direction, the separation target received on the surfaces of the stirring blades with the rotation of the conical drum is efficiently stirred.

As a sixth feature in addition to the above-described first feature, a high-specific-gravity material recovery pipe that recovers the high-specific-gravity material is coupled to and downwardly branches off from the discharge pipe, and a separation function water supply unit that supplies the separation function water is disposed on at least one of a lower end of the discharge pipe and the high-specific-gravity material recovery pipe.

Of the separation target flowing out to the discharge pipe, the high-specific-gravity material flows down against the flow of the separation function water and is recovered in the high-specific-gravity material recovery pipe. By supplying the separation function water from the lower end of the discharge pipe toward the conical drum, specific gravity separation is effectively carried out within the discharge pipe, and by supplying the separation function water from the high-specific-gravity material recovery pipe, the low-specific-gravity material is effectively prevented from flowing down to the high-specific-gravity material recovery pipe.

In addition to the above-described first feature, the specific gravity separator according to a seventh feature includes a horizontally elongated portion having a horizontally elongated inner cross-sectional shape in at least a part of the discharge pipe. A high-specific-gravity material recovery pipe that recovers the high-specific-gravity material is coupled to and downwardly branches off from the horizontally elongated portion. The separation function water is supplied from a first water supply unit disposed below a branching portion of the high-specific-gravity material recovery pipe.

The separation target fed from the feeding unit into the conical drum is immersed in the separation function water supplied from the discharge pipe, and subjected to specific gravity separation by stirring with the rotation of the conical drum, so that the high-specific-gravity material is recovered in the high-specific-gravity material recovery pipe via the discharge pipe, and the low-specific-gravity material is discharged together with the separation function water from the large-diameter opening. Even when the high-specific-gravity material and a part of the low-specific-gravity material flow in the discharge pipe in a dense state against the flow of the separation function water, they become a thin-layered state in the horizontally elongated portion and flow down. On this occasion, the separation function water supplied from the first water supply unit flows from the horizontally elongated portion toward the conical drum, whereby the low-specific-gravity material in the thin-layered state with increased contact with the separation function water is efficiently pushed back to the conical drum side, and the high-specific-gravity material flows down the horizontally elongated portion against the flow of the separation function water and is recovered in the high-specific-gravity material recovery pipe.

As an eighth feature in addition to the above-described seventh feature, the inner cross-sectional shape of the horizontally elongated portion is any of a rectangle, a trapezoid, an ellipse, a semicircle, and an arch shape.

Even when the separation target flowing from the conical drum into the discharge pipe flows down in a dense state and thereby causes difficulty in specific gravity separation with the flow of the separation function water, the separation target is horizontally dispersed and flows in a thin-layered state due to the horizontally elongated portion formed in the discharge pipe, leading to increased contact between the separation function water and the separation target. Accordingly, the inner cross-sectional shape of the horizontally elongated portion is preferably any of a rectangle, a trapezoid, an ellipse, a semicircle, and an arch shape.

As a ninth feature in addition to the above-described seventh feature, the horizontally elongated portion includes an inner bottom surface formed into a flat shape.

When the inner bottom surface of the horizontally elongated portion is formed flat, a layer thickness of the separation target flowing down the horizontally elongated portion becomes uniform, whereby specific gravity separation can be uniformly carried out.

As a tenth feature in addition to the above-described seventh feature, the horizontally elongated portion and the high-specific-gravity material recovery pipe are each configured with a transparent member.

Since the horizontally elongated portion and the high-specific-gravity material recovery pipe are configured with the transparent members, it is possible to visually confirm whether the separation target is favorably separated, and further adjust the supplying amount of the separation function water properly.

As an eleventh feature in addition to the above-described first feature, on the upper end side of the conical drum, an annular weir for narrowing the opening is formed.

The separation target fed from the feeding unit into the conical drum is immersed in the separation function water supplied from the discharge pipe, and subjected to specific gravity separation by stirring with the rotation of the conical drum, so that the low-specific-gravity material is discharged together with the separation function water from the large-diameter opening. Of the separation target flowing in the discharge pipe, the high-specific-gravity material flows down against the flow of the separation function water and is recovered. Even when the high-specific-gravity material is mixed in with the low-specific-gravity material to be discharged along the flow of the separation function water from the large-diameter opening, the high-specific-gravity material is not directly discharged due to the weir formed on the upper end side of the conical drum to narrow the opening, but received by the weir so that another opportunity for the specific gravity separation is ensured on the inner side of the weir, and only the low-specific-gravity material gets over the weir and is discharged.

As a twelfth feature in addition to the above-described first feature, a fluid injection mechanism that injects a fluid from an inside of the conical drum toward the small-diameter opening or a vicinity of the small-diameter opening is disposed.

The separation target fed from the feeding unit into the conical drum is immersed in the separation function water supplied from the discharge pipe, and subjected to specific gravity separation by stirring with the rotation of the conical drum, so that the low-specific-gravity material is discharged together with the separation function water from the large-diameter opening. Of the separation target flowing in the discharge pipe, the high-specific-gravity material flows down against the flow of the separation function water and is recovered. Even when the large quantity of separation target is supplied to the conical drum and migrates in a dense state to the small-diameter opening side, the separation target in the dense state is dispersed by the fluid injected by the fluid injection mechanism from the inside of the conical drum toward the small-diameter opening or the vicinity of the small-diameter opening, whereby the specific gravity separation is effectively carried out due to increased contact with the separation function water and migration of the low-specific-gravity material to the large-diameter opening side is facilitated.

As a thirteenth feature in addition to the above-described twelfth feature, the fluid is a gas or a liquid.

As the fluid for dispersing the separation target in a dense state, a gas or a liquid can be suitably used. Examples thereof include compressed air, high pressure water, etc.

### Advantageous Effects of Invention

As described above, with the present invention, it becomes possible to provide a specific gravity separator capable of efficiently separating and recovering a high-specific-gravity material from a separation target and also reducing the quantity of a low-specific-gravity material mixed in with the recovered high-specific-gravity material to thereby achieve a high recovery rate.

### Brief Description of Drawings

Fig. 1A is a plan view of a specific gravity separator to which the present invention is applied.
Fig. 1B is a front view of the specific gravity separator to which the present invention is applied.
Fig. 1C is a right-side view of the specific gravity separator to which the present invention is applied.
Fig. 2A is a bottom view of a main part of a conical drum.
Fig. 2B is a longitudinal cross-sectional view of the main part of the conical drum.
Fig. 2C is a plan view of a baffle to be attached inside the conical drum.
Fig. 2D is a longitudinal cross-sectional view of the main part of the conical drum to which two baffles having different diameters from each other are attached.
Fig. 3A is a longitudinal cross-sectional view of a conical drum including stirring blades.
Fig. 3B is a plan view of the conical drum including the stirring blades.
Fig. 4 is a longitudinal cross-sectional view of a conical drum including a weir.
Fig. 5 is a longitudinal cross-sectional view of a conical drum including a fluid injection mechanism.
Fig. 6A is a left-side view of a precise separation unit.
Fig. 6B is a longitudinal cross-sectional view of the precise separation unit.
Fig. 6C is a right-side view of the precise separation unit.
Fig. 6D is a cross-sectional view taken along the line A-A of Fig. 6B.
Fig. 6E is a bottom view of the precise separation unit.
Fig. 7A is a plan view of one spacer to be incorporated into the precise separation unit.
Fig. 7B is a side view of one spacer to be incorporated into the precise separation unit.
Fig. 7C is a front view of one spacer to be incorporated into the precise separation unit.
Fig. 7D is a plan view of the other spacer to be incorporated into the precise separation unit.
Fig. 7E is a side view of the other spacer to be incorporated into the precise separation unit.
Fig. 7F is a front view of the other spacer to be incorporated into the precise separation unit.
Fig. 8A is a diagram illustrating a separation mechanism of a separation target by the specific gravity separator.
Fig. 8B is a diagram illustrating a separation mechanism by the precise separation unit.
Fig. 9A is an illustrative view of a cross-sectional shape of a horizontally elongated portion for describing another embodiment.
Fig. 9B is an illustrative view of the cross-sectional shape of the horizontally elongated portion for describing another embodiment.
Fig. 9C is an illustrative view of the cross-sectional shape of the horizontally elongated portion for describing another embodiment.
Fig. 9D is an illustrative view of the cross-sectional shape of the horizontally elongated portion for describing another embodiment.
Fig. 10A is an illustrative view of stirring blades for describing another embodiment.
Fig. 10B is an illustrative view of the stirring blades for describing another embodiment.
Fig. 10C is an illustrative view of the stirring blades for describing another embodiment.
Fig. 11A is an illustrative view of a weir for describing another embodiment.
Fig. 11B is an illustrative view of the weir for describing another embodiment.
Fig. 12 is an illustrative view of a main part of a conical drum for describing another embodiment.
Fig. 13A is a graph illustrating a correlation between a feeding quantity of slag and a metal recovery rate in a conventional specific gravity separator.
Fig. 13B is a graph illustrating the correlation between the feeding quantity of slag and the metal recovery rate in the specific gravity separator of the present invention.
Fig. 14A is a bottom view of a main part of a conical drum.
Fig. 14B is a longitudinal cross-sectional view of the main part of the conical drum.
Fig. 14C is a plan view of a baffle to be attached inside the conical drum.
Fig. 14D is a longitudinal cross-sectional view of the main part of the conical drum to which two baffles having different diameters from each other are attached.
Fig. 15A is a longitudinal cross-sectional view of a conical drum including stirring blades.
Fig. 15B is a plan view of the conical drum including the stirring blades.
Fig. 16A is a longitudinal cross-sectional view of a conical drum including a weir.
Fig. 16B is a plan view of the conical drum including the weir.
Fig. 17 is a longitudinal cross-sectional view of a conical drum including a fluid injection mechanism.

### Best Mode for Carrying out the Invention

Hereinafter, an embodiment of a specific gravity separator according to the present invention will be described.

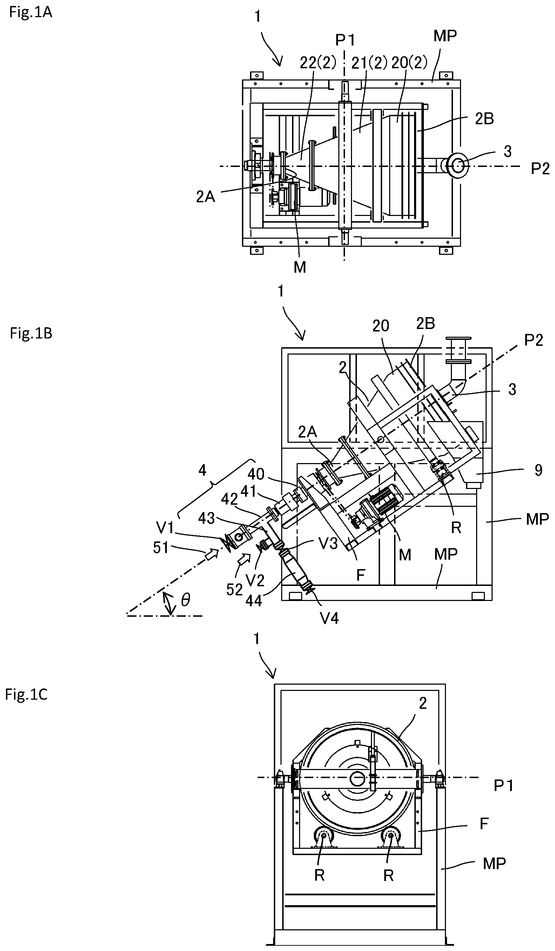

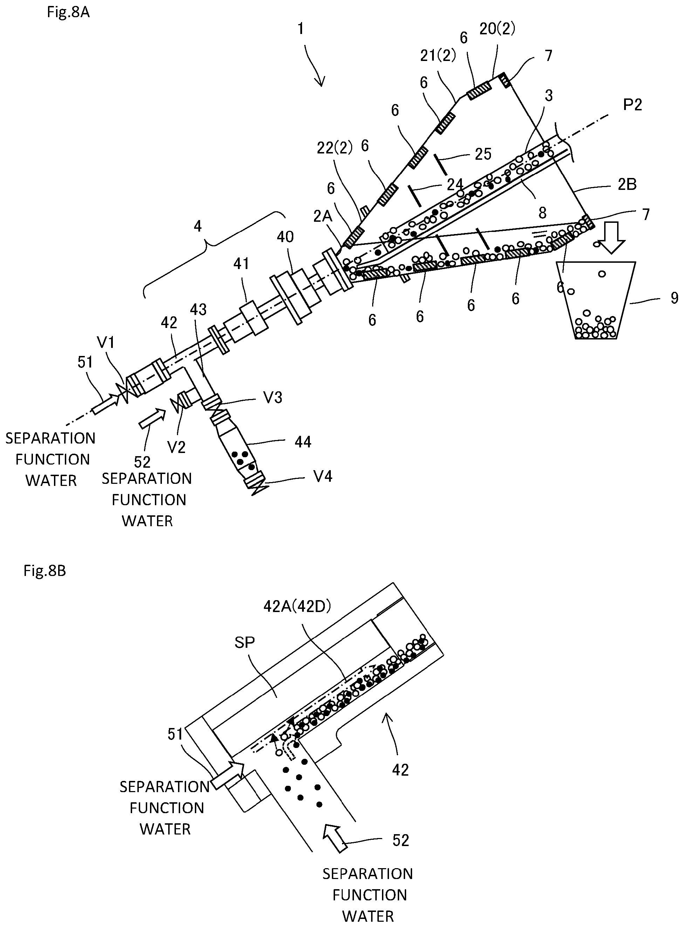

Fig. 1A, Fig. 1B, and Fig. 1C illustrate the general arrangements of a specific gravity separator 1, while Fig. 8A illustrates a main part of the specific gravity separator 1. In the present embodiment, described is a case in which a separation target by the specific gravity separator 1 is crushed slag from molten wastes including valuable metals mixed therein, but the separation target is not particularly limited provided that it includes granular components having different specific gravities.

The specific gravity separator 1 includes: a conical drum 2 including a small-diameter opening 2A on a lower end side and a large-diameter opening 2B on an upper end side; a feeding unit 3 configured with a pipe body, which feeds a granular separation target (in Fig. 8A, a high-specific-gravity material is indicated by black circles while a low-specific-gravity material is indicated by white circles) as well as water from the large-diameter opening 2B side; and a discharge pipe 4 communicating with the small-diameter opening 2A on an upper side via a bearing 40 and a rotary joint 41, where separation function water is supplied from a lower side of the discharge pipe 4. In addition, the specific gravity separator 1 includes a discharge hopper 9 that receives the low-specific-gravity material discharged together with the separation function water from the large-diameter opening 2B.

In the specific gravity separator 1, the conical drum 2 and the discharge pipe 4 are attached to a frame F, which is supported by a shaft rotatably about a horizontal axial center P1 on an approximately rectangular parallelepiped pedestal MP, and the frame F is fixed in an inclined position at a predetermined angle θ relative to the pedestal MP, whereby the conical drum 2 and the discharge pipe 4 are positioned on an inclined axial center P2 at the predetermined angle θ. A suitable range of the predetermined angle θ is appropriately set according to properties of the separation target, a flow velocity of the separation function water, etc., and in the present embodiment, it is set to an inclination angle of 35±5 degrees relative to the horizontal line. Incidentally, in the present embodiment, the conical drum 2 and the discharge pipe 4 are disposed on the inclined axial center P2 via the rotary joint 41, but they may be disposed such that an axial center of the conical drum 2 and an axial center of the discharge pipe 4 are inclined at different angles from each other.

The conical drum 2 is supported, by the frame F, rotatably about the inclined axial center P2. On the frame F, an electromagnetic motor M that rotationally drives the conical drum 2, and a pair of idling rollers R that rotatably support the conical drum 2 are disposed. A sprocket attached to an output shaft of the electromagnetic motor M and a sprocket attached to an inner ring side of the bearing 40 on the small-diameter opening 2A side of the conical drum 2 are drivingly coupled via a chain.

The conical drum 2 is configured with a first drum 21 and a second drum 22 coupled to each other by flange connection, where the large-diameter opening 2B and the small-diameter opening 2A are respectively formed in the first drum 21 and the second drum 22. A cylindrical portion 20 is formed at a leading end of the first drum 21.

A precise separation unit 42 including a horizontally elongated portion 42A having a horizontally elongated inner cross-sectional shape is disposed on the discharge pipe 4 downstream than the rotary joint 41, and a high-specific-gravity material recovery pipe 43 is coupled to and downwardly branches off from the precise separation unit 42. To a lower end side of the precise separation unit 42, a first water supply unit 51 is coupled via a first valve mechanism V1, and the separation function water is supplied from the first water supply unit 51 to the discharge pipe 4.

To the high-specific-gravity material recovery pipe 43, a high-specific-gravity material storage unit 44 is coupled, which includes a third valve mechanism V3 and a fourth valve mechanism V4 on both ends. Furthermore, above the high-specific-gravity material storage unit 44, a second water supply unit 52 is coupled via a second valve mechanism V2, and the separation function water is supplied from the second water supply unit 52 to the discharge pipe 4. The precise separation unit 42, the high-specific-gravity material recovery pipe 43, and the high-specific-gravity material storage unit 44 are each configured with a transparent pipe made of acrylic resin so that the inside thereof can be visually observed.

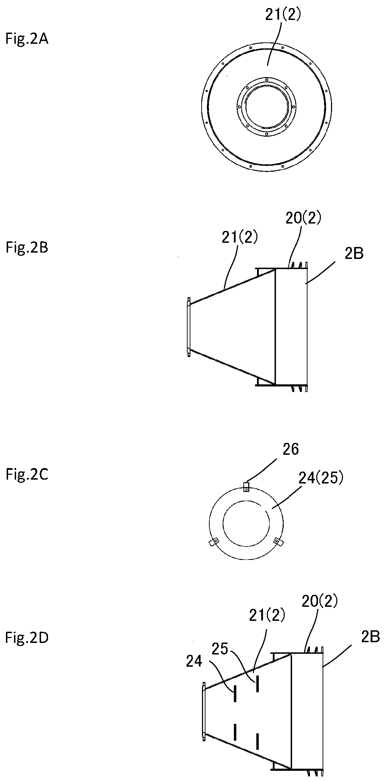

Fig. 2A shows the first drum 21 and the cylindrical portion 20 viewed from the other side of the large-diameter opening 2B, while Fig. 2B shows a cross section of the first drum 21 and the cylindrical portion 20.

In the conical drum 2, a plurality of separation facilitating mechanisms are disposed for the purpose of efficient specific gravity separation of the separation target. The following is the specific description thereof.

### [First Separation Facilitating Mechanism]

As shown in Fig. 2D, inside the first drum 21, two doughnut-shaped disks 24, 25 having different diameters from each other, as shown in Fig. 2C, are disposed in parallel and spaced apart by a predetermined distance along the axial center P2. The disks 24, 25 are secured to an inner peripheral surface of the first drum 21 via attachment units 26 formed in three positions of each of outer peripheral edges of the disks 24, 25 such that a gap serving as a path for the separation target is formed between each of the outer peripheral edges of the disks 24, 25 and the inner peripheral surface of the first drum 21.

When the separation target fed from the feeding unit 3 is carried in a dense state toward the large-diameter opening 2B by the separation function water, the separation target is received by the respective disks 24, 25 and stirred, and after specific gravity separation, mainly light components are flowed toward the large-diameter opening 2B via the gap formed between each of the outer peripheral edges of the disks 24, 25 and an inner wall of the first drum 21. Each of the disks 24, 25 serves as a first separation facilitating mechanism functioning as a baffle.

### [Second Separation Facilitating Mechanism]

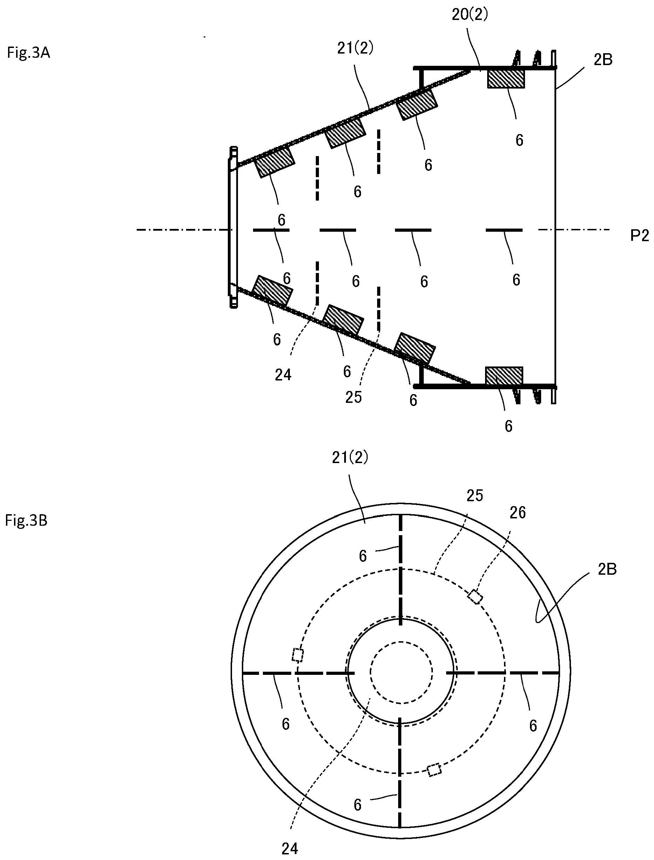

As shown in Fig. 3A, Fig. 3B, and Fig. 8A, on inner walls of the first drum 21 and the second drum 22, a stirring blade 6 is installed, which stirs the separation target with the rotation of the conical drum 2. In this example, the stirring blades 6 are disposed around the axial center P2 at equal intervals of 90 degrees in a circumferential direction of the conical drum 2, as viewed from a direction of the axial center P2 of the conical drum 2, and the four flat rectangular stirring blades 6 intermittently extend in the direction of the axial center P2 of the conical drum 2.

The separation target fed from the feeding unit 3 into the conical drum 2 is immersed in the separation function water supplied from the discharge pipe 4, and subjected to specific gravity separation by stirring with the rotation of the conical drum 2, so that the low-specific-gravity material is discharged together with the separation function water from the large-diameter opening 2B. On this occasion, due to the stirring blades 6 installed on the inner wall of the conical drum 2, the high-specific-gravity material and the low-specific-gravity material are effectively stirred by the stirring blades 6 with the rotation of the conical drum 2 even when the large quantity of separation target is supplied to the conical drum 2 and migrates in a dense state to the small-diameter opening 2A side; and as a result of increased contact with the separation function water, the specific gravity separation is effectively carried out and migration of the low-specific-gravity material to the large-diameter opening 2B side is facilitated. The stirring blades 6 function as a second separation facilitating mechanism.

The stirring blade 6 preferably includes a plurality of stirring blades 6 installed in the circumferential direction of the conical drum 2. The stirring blades 6 are preferably installed to extend in the direction of the axial center P2 of the conical drum 2 from the small-diameter opening 2A to the large-diameter opening 2B, or preferably installed intermittently in the direction of the axial center P2. In addition, the stirring blades 6 are preferably installed in a posture along a radial direction of the conical drum 2 or in an inclined posture at a predetermined angle relative to the radial direction.

The shape of each stirring blade 6 is not limited to the flat rectangular shape, and a curved portion may be formed like a screw blade or a part or the entire thereof is formed into an arc shape such that the separation target can be efficiently drawn up with the rotation of the conical drum 2. Moreover, the stirring blade 6 is not limited to an aspect where the entire of a base portion thereof is secured to the inner wall surface of the conical drum 2, and a part of the base portion of the stirring blade 6 may be separated from the inner wall surface of the conical drum 2. A degree of separation is preferably equal to or lower than an average particle diameter of the separation target since the excessively large degree leads to the impaired stirring action.

### [Third Separation Facilitating Mechanism]

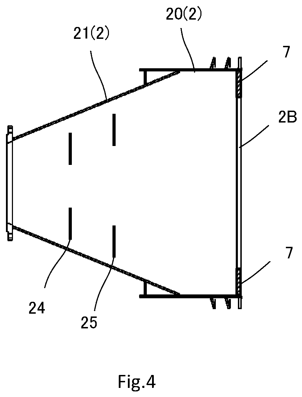

As shown in Fig. 4, at an edge of the cylindrical portion 20 in which the large-diameter opening 2B of the conical drum 2 is formed, an annular weir 7 for narrowing the opening is installed in a posture perpendicular to the cylindrical portion 20 and rises up toward the inclined axial center P2. The weir 7 is preferably formed into an annular shape, that is, formed around the entire edge of the cylindrical portion 20, but a part thereof may be missing to facilitate drainage of the separation function water.

The weir 7 receives the high-specific-gravity material mixed in with the low-specific-gravity material, which is otherwise discharged directly into the discharge hopper 9 by the flow of the separation function water, and the separation target is retained on the inner side of the weir 7 so that opportunity for specific gravity separation is ensured. A height of the weir 7 may be appropriately set according to the quantity of the separation target to be fed, the amount of the separation function water to be supplied, etc. In other words, the weir 7 functions as a third separation facilitating mechanism.

An installation height of the weir 7 in a radial direction of the axial center is set to be higher than an installation height of each stirring blade 6 in the radial direction of the axial center. In this manner, even if the separation target exhibits a behavior like getting over the stirring blades 6 together with the separation function water during stirring of the separation target with the stirring blades 6, it is possible to prevent the high-specific-gravity material contained in the separation target from getting over the weir 7 and being discharged to the low-specific-gravity material side.

### [Fourth Separation Facilitating Mechanism]

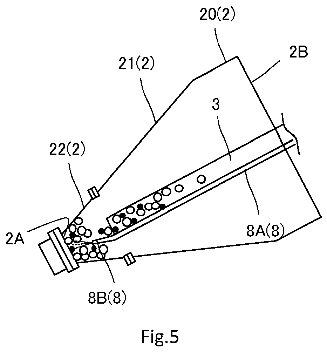

As shown in Fig. 5, a fluid injection mechanism 8 is disposed, which injects a fluid from the inside of the conical drum 2 (21, 22) toward the small-diameter opening 2A or the vicinity of the small-diameter opening 2A. If the large quantity of separation target fed from the feeding unit 3 flows in the small-diameter opening 2A in a short period of time, there is a risk of blockage of the small-diameter opening 2A. In such a case, by injecting the fluid from the fluid injection mechanism 8 toward the small-diameter opening 2A or the vicinity of the small-diameter opening 2A, the separation target is dispersed by fluid pressure and the blockage of the small-diameter opening 2A is resolved.

The fluid injection mechanism 8 can be configured with a fluid supply pipe 8A disposed along the pipe body constituting the feeding unit 3, and a nozzle 8B disposed on a leading end of the fluid supply pipe 8A. The fluid injected from the fluid injection mechanism 8 may be a liquid such as water, or may be a gas such as air. In other words, the fluid injection mechanism 8 functions as a fourth separation facilitating mechanism.

An stirring blade that can achieve the same function as described above may be disposed on the inner wall of the discharge pipe 4 upstream than the rotary joint 41, such that even when the low-specific-gravity material is mixed in with the high-specific-gravity material flowing down to the discharge pipe 4, specific gravity separation is facilitated by the stirring function and the low-specific-gravity material is carried away toward the conical drum 2 along the flow of the separation function water.

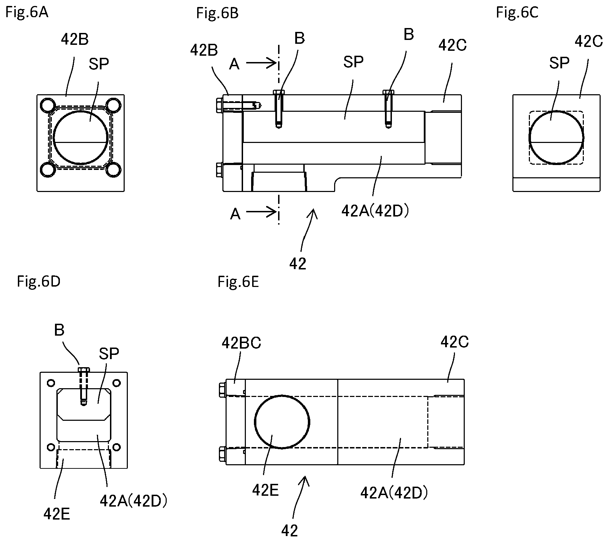

In Fig. 6A, Fig. 6B, Fig. 6C, Fig. 6D, and Fig. 6E, the precise separation unit 42 is shown.

The precise separation unit 42 is disposed in at least a part of the discharge pipe 4. The precise separation unit 42 includes the horizontally elongated portion 42A having the horizontally elongated inner cross-sectional shape, and the high-specific-gravity material recovery pipe 43 is coupled to and downwardly branches off from the horizontally elongated portion 42A.

The precise separation unit 42 includes connecting units 42B, 42C having a circular cross section respectively on left and right ends, and is configured such that a circular pipe body can be coupled to each of the connecting units 42B, 42C. A path 42D having a rectangular cross section is formed between the left and right connecting units 42B, 42C, and a spacer SP having a rectangular cross section is inserted into the upper part of the path 42D and fastened by a bolt B.

The horizontally elongated portion 42A is configured with the path 42D into which the spacer SP is inserted and secured. On a bottom surface of the path 42D to the left side of the connecting unit 42B, a connecting unit 42E for the high-specific-gravity material recovery pipe 43 is disposed, which has a circular cross section.

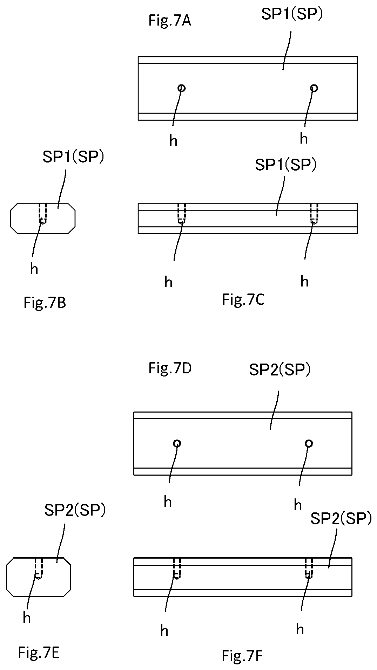

In Fig. 7A, Fig. 7B, Fig. 7C, Fig. 7D, Fig. 7E, and Fig. 7F, two kinds of spacers SP are shown, which are housed in the precise separation unit 42. The spacers SP are made of transparent acrylic resin, and each configured as a rectangular parallelepiped block including screw holes h in two positions on the upper surface. The blocks are different in thickness, and are configured to enable adjustment of the flow velocity of the separation function water by varying a cross-sectional area of a flow channel of the horizontally elongated portion 42A depending on which spacer SP is attached to the path 42D. A cross-sectional shape of the path 42D, into which a spacer SP2 as shown in Fig. 7E and Fig. 7F is inserted and secured, has the smaller cross-sectional area of the flow channel and a horizontally more elongated shape, as compared with a case in which a spacer SP1 as shown in Fig. 7A, Fig. 7B, and Fig. 7C is inserted and secured.

In Fig. 8A and Fig. 8B, a separation mechanism of the separation target by the above-described specific gravity separator 1 is shown.

Once the separation function water is supplied from the first water supply unit 51 and the second water supply unit 52, the separation target (the high-specific-gravity material is indicated by black circles while the low-specific-gravity material is indicated by white circles) is fed into the rotating conical drum 2 from the feeding unit 3; then, the separation function water and the separation target are subjected to specific gravity separation under stirring in the conical drum 2; mainly the high-specific-gravity material is transported to the small-diameter opening 2A against the flow of the separation function water; and mainly the low-specific-gravity material is transported to the large-diameter opening 2B with the flow of the separation function water and overflows the large-diameter opening 2B so as to be recovered by the discharge hopper 9.

Even when the large quantity of separation target is fed from the feeding unit 3, the separation target is transported in a dense state along the flow of the separation function water to the large-diameter opening 2B side, but is blocked by the disks 24, 25 functioning as the baffles and transported little by little to the large-diameter opening 2B side through the small gaps between the disks 24, 25 and the conical drum 2, whereby the specific gravity separation action is facilitated. Even when the separation target gets over the disks 24, 25 and is transported to the large-diameter opening 2B side, sufficient opportunity for the specific gravity separation is ensured as a result of increased contact of the separation target with the separation function water due to the stirring effect of the stirring blades 6 installed on the inner wall of the conical drum 2, as well as difference between fall velocities of the high-specific-gravity material and the low-specific-gravity material when the treatment target elevated by the stirring blades is falling through the water.

Furthermore, even when the high-specific-gravity material is blended into the low-specific-gravity material and transported to the large-diameter opening 2B, the discharge into the discharge hopper 9 is temporarily blocked by the weir 7 disposed at the edge while specific gravity separation is facilitated to prevent the high-specific-gravity material from being discharged into the discharge hopper 9.

When there is a risk that the small-diameter opening 2A is filled with the large quantity of separation target and blocked, injection of the fluid from the fluid injection mechanism 8 causes dispersion of the separation target in the dense state due to the fluid pressure, thereby avoiding the blockage.

In this manner, the separation target dispersed by the plurality of separation facilitating mechanisms is subjected to specific gravity separation in the separation function water, and mainly the high-specific-gravity material flows out from the small-diameter opening 2A to the discharge pipe 4 while mainly the low-specific-gravity material is discharged into the discharge hopper 9 via the large-diameter opening 2B.

As shown in Fig. 8B, even when the high-specific-gravity material and a part of the low-specific-gravity material flow in the discharge pipe 4 in a dense state against the flow of the separation function water, they become a thin-layered state in the horizontally elongated portion 42A of the precise separation unit 42 and flow down. On this occasion, the separation function water supplied from the first water supply unit 51 flows from the horizontally elongated portion 42A toward the conical drum 2, whereby the low-specific-gravity material with increased contact with the separation function water due to the thin-layered state is efficiently pushed back to the conical drum side, and the high-specific-gravity material flows down the horizontally elongated portion 42A against the flow of the separation function water and is recovered in the high-specific-gravity material recovery pipe 43.

An inner bottom surface of the horizontally elongated portion 42A is preferably formed flat, such that a layer thickness of the separation target flowing down the horizontally elongated portion 42A can be uniformly thin, leading to uniform precision of the specific gravity separation with the separation function water.

Even when the separation function water supplied from the first water supply unit 51 flows over the upper surface side of the separation target flowing down after becoming the thin-layered state in the horizontally elongated portion 42A and does not sufficiently contribute to specific gravity separation (see the arrow indicated by the dashdotted line in Fig. 8B), the separation function water supplied from the second water supply unit 52 goes up through the high-specific-gravity material recovery pipe 43 and flows from the bottom side of the horizontally elongated portion 42A toward the separation target, whereby the low-specific-gravity material is pushed back to the conical drum 2 side and the separation function water comes in contact with the thin-layered flowing-down separation target from the lower layer side thereof, thereby achieving the effective specific gravity separation function under stirring (see the arrow indicated by the broken line in Fig. 8B).

By varying the thickness of the spacer SP depending on the quantity of the separation target fed from the feeding unit 3 into the conical drum 2 or the quantity of the high-specific-gravity material contained in the separation target, separation performance of the precise separation unit 42 can favorably be adjusted. For example, if the quantity of the high-specific-gravity material contained in the separation target is high, the use of the thin spacer SP can enhance precision of specific gravity separation. Note that the cross-sectional shape of the horizontally elongated portion 42A may be fixed to a constant form with no spacer SP disposed.

Hereinafter, other embodiments of the present invention will be described.

In the above-described embodiment, described is the aspect in which the separation function water is supplied from both of the first water supply unit 51 on the lower side of the discharge pipe 4 than a branching portion of the high-specific-gravity material recovery pipe 43, and the second water supply unit 52 disposed on the high-specific-gravity material recovery pipe 43. However, a flow ratio of the separation function water supplied from the first water supply unit 51 and the second water supply unit 52 is not particularly limited, and can be appropriately set based on the properties and the feeding quantity of the separation target.

The separation function water is supplied from both of the first water supply unit 51 and the second water supply unit 52 in the described aspect, but it may be supplied from any one of them. In other words, a separation function water supply unit that supplies the separation function water may be disposed on the lower end of the discharge pipe 4 and/or the high-specific-gravity material recovery pipe 43.

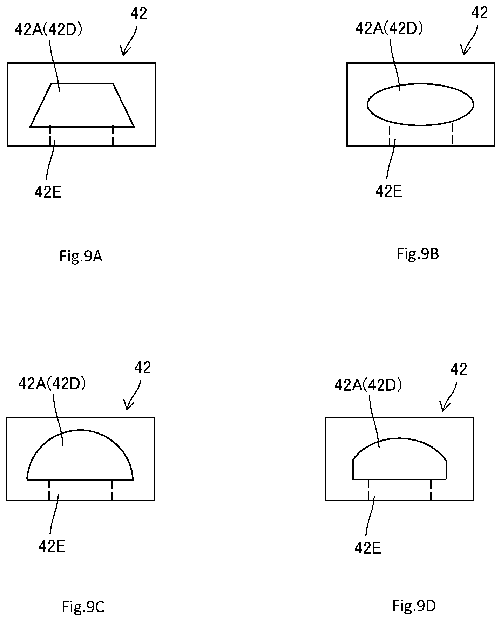

In the above-described embodiment, described is the aspect in which the inner cross-sectional shape of the horizontally elongated portion 42A is formed into a rectangular shape, but the inner cross-sectional shape of the horizontally elongated portion 42A may be any other shape such as a trapezoid, an ellipse, a semicircle, and an arch shape as shown in Fig. 9A, Fig. 9B, Fig. 9C, and Fig. 9D. The shape may be the one causing the separation target transported to the horizontally elongated portion 42A to become a thinner layer state than on the upstream side of the horizontally elongated portion 42A after flowing down the same. This can be addressed by replacing the spacer SP to change the inner cross-sectional shape of the horizontally elongated portion 42A.

The respective stirring blades 6 shown in Fig. 3A and Fig. 3B are installed in a posture parallel to the direction of the axial center P2 of the conical drum 2 and in a perpendicular posture oriented from the inner wall to the axial center P2, but may be installed in an inclined posture to the direction of the axial center P2 of the conical drum 2, or in an inclined posture in a direction from the inner wall to the axial center P2. Note that the shape of each stirring blade 6 is not limited to the flat rectangular shape. Moreover, the stirring blades 6 may continuously extend in the direction of the axial center P2 of the conical drum 2.

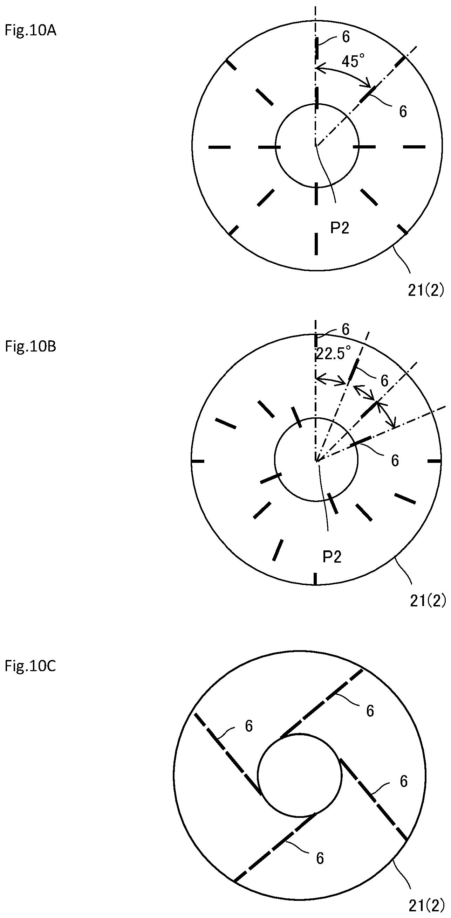

Fig. 10A, Fig. 10B, and Fig. 10C show other aspects of the stirring blades 6. Fig. 10A shows an example in which among the stirring blades 6 shown in Fig. 3A and Fig. 3B, the four stirring blades 6 are arranged from the small-diameter opening 2A to the large-diameter opening 2B of the conical drum 2, in which the odd-numbered stirring blades 6 and the even-numbered stirring blades 6 are disposed at intervals of 45 degrees about the axial center P2. Fig. 10B shows an example in which among the stirring blades 6 shown in Fig. 3A and Fig. 3B, the four stirring blades 6 are arranged from the small-diameter opening 2A to the large-diameter opening 2B of the conical drum 2 at intervals of 22.5 degrees about the axial center P2. Fig. 10C shows an example in which among the stirring blades 6 shown in Fig. 3A and Fig. 3B, the four stirring blades 6 are arranged from the small-diameter opening 2A to the large-diameter opening 2B of the conical drum 2 along a tangential direction of the small-diameter opening 2A of the first drum 21. These are examples and can be appropriately configured as long as it can promote the stirring effect, and also the shape of each stirring blade 6 is not limited to the rectangular shape.

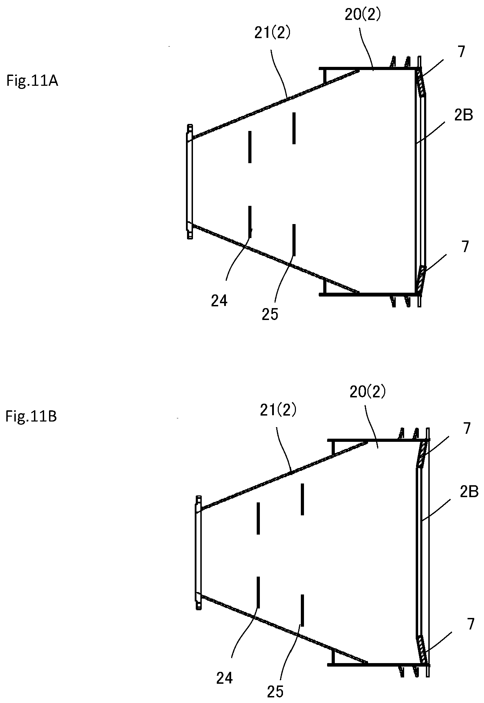

As shown in Fig. 11A, the annular weir 7 may be installed in a posture with a leading end thereof inclined outward from the cylindrical portion 20, or the annular weir 7 may be installed in a posture with the leading end thereof inclined inward into the cylindrical portion 20 as shown in Fig. 11B.

In the above-described embodiment, described is the example in which the conical drum 2 includes the first drum 21 and the second drum 22 coupled to each other by flange connection, and the cylindrical portion 20 is formed at the leading end of the first drum 21. However, an aspect in which the first drum 21 and the second drum 22 are integrally formed, or an aspect in which no cylindrical portion 20 is disposed at the leading end of the first drum 21 may be applied.

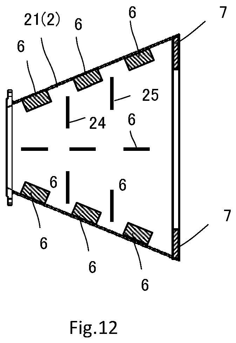

Fig. 12 shows the aspect of the conical drum 2 including no cylindrical portion 20 at the leading end of the first drum 21, where the conical drum 2 is provided with the disks 24, 25 as the first separation facilitating mechanism, the stirring blades 6 as the second separation facilitating mechanism, and the annular weir 7 for narrowing the opening as the third separation facilitating mechanism.

In the above-described embodiment, the described configuration includes all the first to fourth, that is, four kinds of separation facilitating mechanisms, but the separation facilitating mechanism incorporated into the specific gravity separator 1 may be any one of the first to fourth separation facilitating mechanisms, or a plurality of separation facilitating mechanisms in any appropriate combination thereof may be incorporated.

Preferably, the annular weir 7 for narrowing the opening is formed on the upper end side of the conical drum 2 and the stirring blades 6 are installed on the inner wall on the upper side of the conical drum 2, that is, in the vicinity of the weir 7, such that the separation target received by the weir 7 is quickly stirred by the stirring blades 6, resulting in effective specific gravity separation.

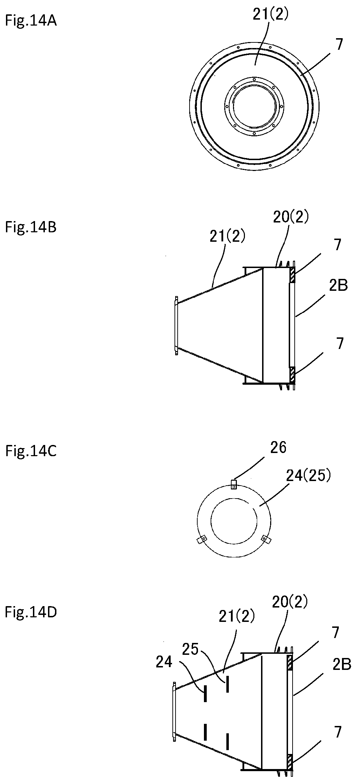

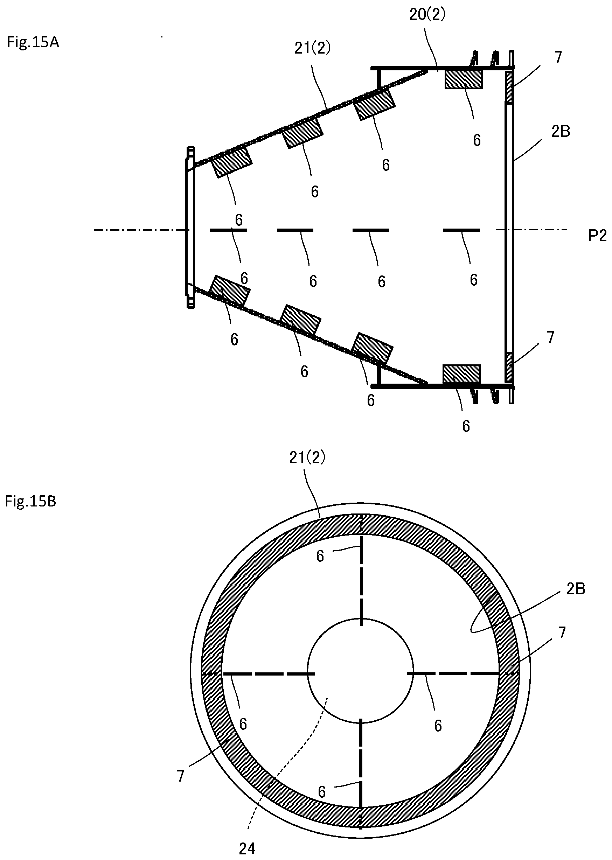

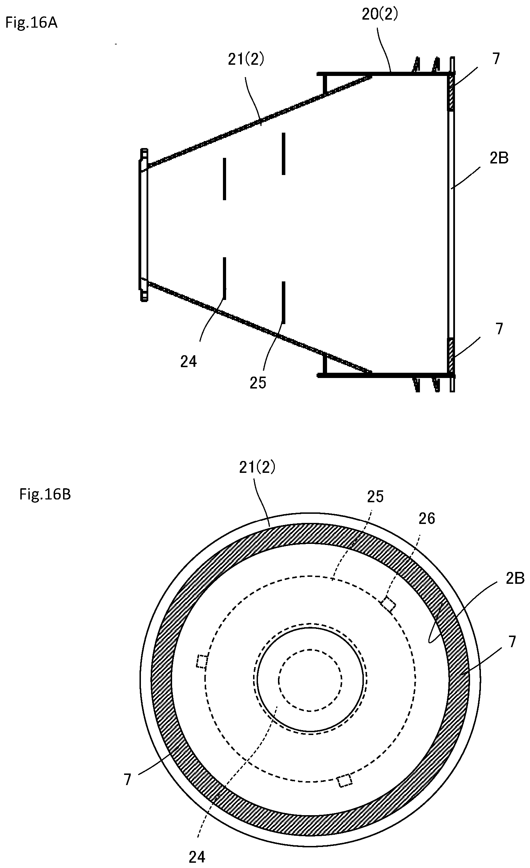

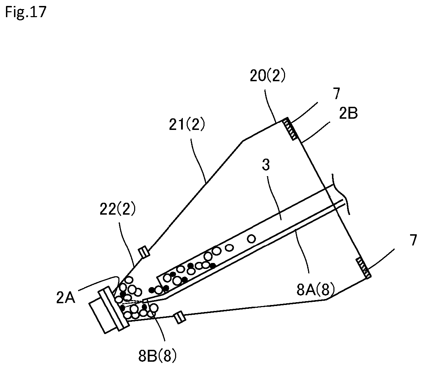

Fig. 14A to Fig. 17 show aspects in which the specific gravity separator 1 including the disks 24, 25 functioning as the first separation facilitating mechanism or the stirring blades 6 functioning as the second separation facilitating mechanism further includes the weir 7 functioning as the third separation facilitating mechanism. The specific gravity separator 1 according to the present invention may include any one of the above-described first to fourth separation facilitating mechanisms, or include a combination of any two or more of the first to fourth separation facilitating mechanisms.

### Example

Fig. 13A shows a relation between the quantity of the raw material (slag) as the separation target fed into the specific gravity separator 1 and the recovery rate of the high-specific-gravity material (metals). The experimental results were obtained in the case of the specific gravity separator 1 including only the disks 24, 25 as the first separation facilitating mechanism among the above-described separation facilitating mechanisms. It can be seen that as the feeding quantity of the raw material increases, the recovery rate of metals tends to decrease.

Fig. 13B shows a relation between the quantity of the raw material (slag) fed into the specific gravity separator 1 further including the stirring blades 6 and the recovery rate of the high-specific-gravity material (metals) (encircled area in the figure). It was confirmed that by providing the stirring blades 6, the recovery rate of metals increased even when the feeding quantity of the raw material was increased.

The above-described embodiment is merely one example of the present invention, and the specific configuration of each section can be modified and designed as appropriate to the extent that the operations and effects of the present invention can be obtained.

### Reference Signs List

1: specific gravity separator
2: conical drum
20: cylindrical portion
21: first drum
22: second drum
23: spiral groove
24: disk (baffle)
25: disk (baffle)
26: attachment unit
2A: small-diameter opening
2B: large-diameter opening
3: feeding unit
4: discharge pipe
40: bearing
41: rotary joint
42: precise separation unit
42A: horizontally elongated portion
42D: path
SP: spacer
43: high-specific-gravity material recovery pipe
44: high-specific-gravity material storage unit
V1: first valve mechanism
V2: second valve mechanism
V3: third valve mechanism
V4: fourth valve mechanism
51: first water supply unit
52: second water supply unit
7: weir
8: fluid injection mechanism
9: discharge hopper
F: frame
MP: pedestal
M: motor
R: idling roller
P1: horizontal axial center
P2: inclined axial center

## Claims

1. A specific gravity separator comprising:
a conical drum rotatably supported about an axial center in an inclined posture, the conical drum comprising a small-diameter opening on a lower end side and a large-diameter opening on an upper end side;
a feeding unit that feeds a granular separation target into the conical drum; and
a discharge pipe disposed in an inclined posture, the discharge pipe communicating with the small-diameter opening on an upper end side,
the specific gravity separator being configured to: supply separation function water from the discharge pipe toward the conical drum while the conical drum is rotating; recover a high-specific-gravity material contained in the separation target flowing down from the small-diameter opening to the discharge pipe against a flow of the separation function water; and discharge a low-specific-gravity material contained in the separation target from the large-diameter opening of the conical drum together with the separation function water, thereby recovering the low-specific-gravity material,
wherein at least one stirring blade that stirs the separation target with rotation of the conical drum is installed on an inner wall of the conical drum.

2. The specific gravity separator according to claim 1, wherein the at least one stirring blade comprises a plurality of stirring blades installed in a circumferential direction of the conical drum.

3. The specific gravity separator according to claim 1, wherein the at least one stirring blade is installed to extend in a direction of the axial center of the conical drum from the small-diameter opening to the large-diameter opening.

4. The specific gravity separator according to claim 3, wherein the at least one stirring blade is intermittently installed in the direction of the axial center.

5. The specific gravity separator according to claim 3, wherein the at least one stirring blade is installed in a posture along a radial direction of the conical drum or in an inclined posture at a predetermined angle relative to the radial direction.

6. The specific gravity separator according to claim 3, wherein a high-specific-gravity material recovery pipe that recovers the high-specific-gravity material is coupled to and downwardly branches off from the discharge pipe, and a separation function water supply unit that supplies the separation function water is disposed on at least one of a lower end of the discharge pipe and the high-specific-gravity material recovery pipe.

7. The specific gravity separator according to claim 1, comprising a horizontally elongated portion having a horizontally elongated inner cross-sectional shape in at least a part of the discharge pipe, wherein a high-specific-gravity material recovery pipe that recovers the high-specific-gravity material is coupled to and downwardly branches off from the horizontally elongated portion, and the separation function water is supplied from a first water supply unit disposed below a branching portion of the high-specific-gravity material recovery pipe.

8. The specific gravity separator according to claim 7, wherein the inner cross-sectional shape of the horizontally elongated portion is any of a rectangle, a trapezoid, an ellipse, a semicircle, and an arch shape.

9. The specific gravity separator according to claim 7, wherein the horizontally elongated portion comprises an inner bottom surface formed into a flat shape.

10. The specific gravity separator according to claim 7, wherein the horizontally elongated portion and the high-specific-gravity material recovery pipe are each configured with a transparent member.

11. The specific gravity separator according to claim 1, wherein, on the upper end side of the conical drum, an annular weir for narrowing the opening is formed.

12. The specific gravity separator according to claim 1, wherein a fluid injection mechanism that injects a fluid from an inside of the conical drum toward the small-diameter opening or a vicinity of the small-diameter opening is disposed.

13. The specific gravity separator according to claim 12, wherein the fluid is a gas or a liquid.
